# EUROPEAN PATENT SPECIFICATION

(11) **EP 4 166 363 B1**
(45) Date of publication and mention of the grant of the patent: **05.03.2025**
(21) Application number: 22201047.2
(22) Date of filing: 12.10.2022
(51) Int. Cl.: B60K 6/44, B60K 6/48, B60K 6/387, B60K 6/485

(54) **WORK VEHICLE WITH AT LEAST PARTIAL ELECTRIC TRACTION**
ARBEITSFAHRZEUG MIT ZUMINDEST TEILWEISE ELEKTRISCHEM ANTRIEB
VÉHICULE DE TRAVAIL À TRACTION AU MOINS PARTIELLEMENT ÉLECTRIQUE

(30) Priority: 13.10.2021 IT 202100026231
(43) Date of publication of application: 19.04.2023
(73) Proprietor: CNH Industrial Italia S.p.A., 10156 Torino (IT)
(72) Inventor: Fiorati, Stefano, 44028 Poggio Renatico (Ferrara) (IT); Lenzini, Nicola, 41027 Pievepelago (MO) (IT); Traversi, Andrea, 50013 Campi Bisenzio (Florence) (IT)
(74) Representative: CNH Industrial IP Department

(56) References cited:
- WO-A1-2007/053629
- WO-A2-2008/042319
- US-A1- 2007 227 801
- US-A1- 2009 018 716
- US-A1- 2018 072 252

## Description

### TECHNICAL FIELD

The present invention concerns a work vehicle, preferably an agricultural vehicle, such as a tractor.

### BACKGROUND OF THE INVENTION

As is known, vehicle electrification is the process of powering vehicles through electricity by replacing vehicle components that operate on a conventional energy source with components that operate on electricity. Indeed, it has been observed that at least in some respects electric traction is a more sustainable and greener transport solution than conventional technologies employing internal combustion engines.

The possibility of electrifying agricultural vehicles has also been widely studied recently.

For instance, US20180072252 A1 discloses a hybrid vehicle, such as a passenger car or a truck, including a hybrid-electric powertrain provided with an internal combustion engine, an electric machine, a transmission and a high-voltage battery pack. The electric machine of document US20180072252 A1 is configured both to power the ground engaging wheels to allow motion of the work vehicle on the ground and to power electric tools handled by the user by means of an external socket.

In addition, the hybrid-electric powertrain of the vehicle disclosed in document US20180072252 A1 has a serial configuration and a clutch is interposed between the internal combustion engine and the electric machine.

A similar arrangement is further disclosed in US2009018716.

However, analyses showed that the electrification of agricultural vehicles should be regarded as a long-term rather than a short-term goal. It should be noted, in fact, that the use of electric agricultural vehicles requires infrastructures for recharging batteries, which farms completely lack at the moment.

Therefore, the need is felt to obtain a work vehicle, which takes advantage of the benefits of electric traction, without requiring the installation of dedicated recharging infrastructure on farms.

An aim of the present invention is to satisfy the above mentioned need in a cost effective and optimized manner.

### SUMMARY OF THE INVENTION

The aforementioned aim is reached by a work vehicle, as claimed in the appended independent claim.

Preferred embodiments of the invention are realized according to the claims dependent or related to the above independent claim.

### BRIEF DESCRIPTION OF DRAWINGS

For a better understanding of the present invention, a preferred embodiment is described in the following, by way of a non-limiting example, with reference to the attached drawings wherein:
- Figure 1 is a schematic representation of a work vehicle according to the present invention with parts removed for clarity;
- Figure 2 is a schematic representation of a portion of the work vehicle of figure 1 with parts removed for clarity; and
- Figure 3 is a schematic representation of a cooling system of the work vehicle of figures 1 and 2.

### DETAILED DESCRIPTION OF THE INVENTION

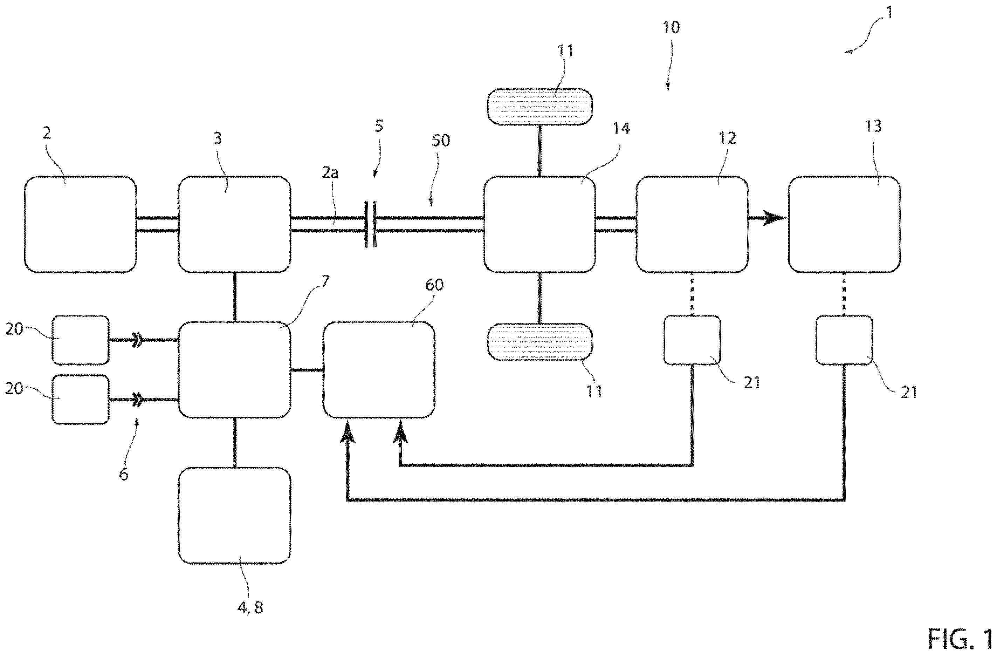

With reference to figure 1, numeral 1 indicates a work vehicle, in particular an agricultural vehicle such as a tractor. The following description will make explicit reference, without this implying any loss of generality, to a tractor specifically intended for vineyard or orchard applications.

Work vehicle 1 comprises a not-shown main body and a plurality of wheels 11 - only two of which are schematically shown in figure 1 - which are rotatable about respective rotational axes so as to move the main body with respect to the ground. In particular, it is possible to define a front portion and a rear portion of work vehicle 1 according to an advancement direction of work vehicle 1. In addition, it is possible to define a ventral portion of work vehicle 1 as the portion of work vehicle 1 facing the ground.

Work vehicle 1 further comprises at least one power take off assembly 12, to which one or more mechanical implements 13 can be attached. Power take off assembly 12 and mechanical implements 13 may be arranged at the front portion and/or at the rear portion and/or at the ventral portion of work vehicle 1.

Work vehicle 1 comprises also a hydraulic system - not shown - comprising ducts, at least one reservoir, at least one pump and a plurality of valves, which are configured to perform a variety of functions, such as raising and lowering parts of work vehicle 1 or mechanical implements 13 with respect to the main body.

Wheels 11, power take off assembly 12, mechanical implements 13 and the hydraulic system are examples of components 10 of work vehicle 1 or couplable to work vehicle 1 that require mechanical power to operate. In particular, the mechanical power required to operate all or part of components 10 at a given time will be hereinafter referred to as required power P.

Work vehicle 1 further comprises an internal combustion engine 2, which is adapted to generate mechanical energy to drive components 10. In particular, the mechanical power generated by internal combustion engine 2, which is equal to the mechanical energy generated by internal combustion engine 2 per unit time, will be hereinafter referred to as engine power P_{E}.

Preferably, internal combustion engine 2 is a diesel engine. However, internal combustion engine 2 may be an internal combustion engine using any type of thermal cycle and fuel.

Internal combustion engine 2 comprises, in turn, a drive shaft 2a, which is driven in rotation by an engine torque T_{E} that is directly proportional to engine power P_{E}.

Work vehicle 1 comprises a drivetrain 50 operatively connecting internal combustion engine 2 to components 10 in order to transmit the rotational motion of drive shaft 2a to components 10 (figure 1). In detail, drivetrain 50 comprises a clutch 5, which is adapted to selectively mechanically connect drive shaft 2a to components 10.

Drivetrain 50 further comprises a gearbox 14, which is adapted to transmit and convert the engine torque T_{E} from clutch 5 to wheels 11. Gearbox 14 is known per se and will not be further described in detail herein.

Furthermore, work vehicle 1 comprises or is couplable to one or more electric implements 20. Electric implements 20 may be variously arranged on work vehicle 1, e.g. in proximity to the front portion and/or at the rear portion and/or at the ventral portion. Electric implements 20 may also be integrated in mechanical implements 13. By way of example, electric implements 20 may comprise lightning devices or a digital dashboard.

As shown in figure 1, vehicle 1 comprises an electric machine 3, which is operatively connected to internal combustion engine 2 and electric energy storage means 4, which are electrically connected to electric machine 3. In detail, electric energy storage means 4 have a specific capacity, which is the maximum amount of electric energy that can be extracted from electric storage means 4 under certain conditions.

Advantageously, electric machine 3 can be set to:
- a first mode, in which electric machine 3 is driven by internal combustion engine 2 and works as a generator adapted to generate electric energy. Such generated electric energy is stored by electric energy storage means 4 and/or used to power electric implements 20; and/or
- a second mode, in which electric machine 3 is powered by electric energy storage means 4 to work as a motor adapted to generate mechanical power to drive components 10 and electric energy storage means 4 are adapted to power electric implements 20 with the electric energy stored therein.

When electric machine 3 works as a motor, it is adapted to generate a mechanical power, which will be hereinafter referred to as motor power P_{M}.

Electric machine 3 may be set to the first or second mode based on an ECMS (Equivalent Consumption Minimization Strategy) algorithm.

By way of example, electric machine 3 is set to the second mode when the required power P that is necessary to drive components 10 is greater than a power threshold P₀. Preferably but not necessarily, power threshold P₀ may be calculated according to the ECMS algorithm. In further detail, electric machine 3 may be set to the second mode when the required power P exceeds power threshold P₀ transiently or over an extended time interval. Nevertheless, the electric machine 3 is adapted to work as a motor according to the capacity of electric energy storage means 4.

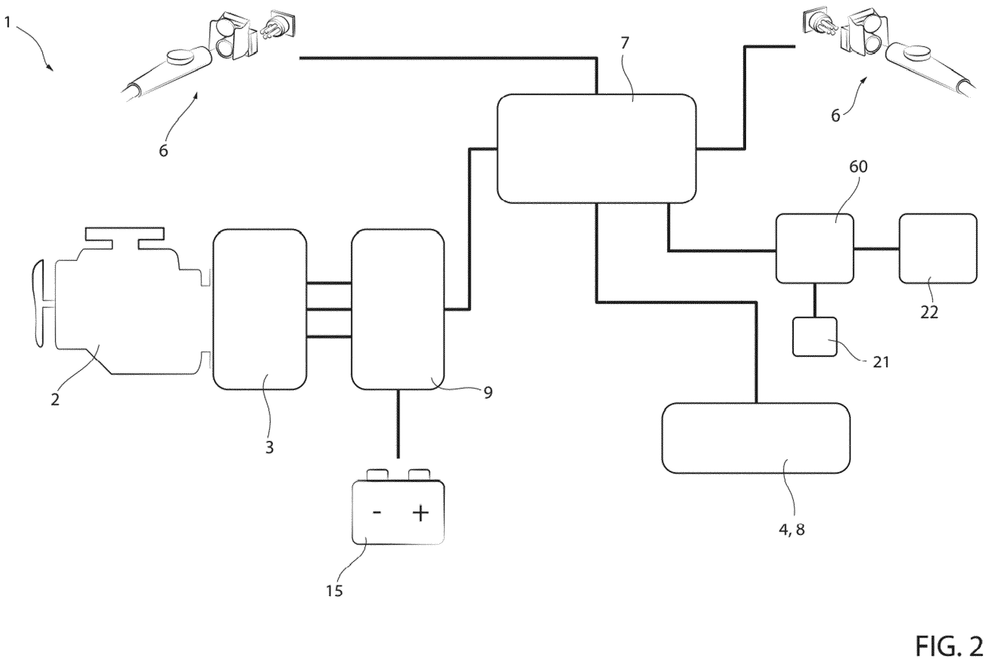

In addition, work vehicle 1 may comprise a plurality of sensor means 21 - only schematically shown in figures 1 and 2 - which are configured to detect one or more physical quantities (forces, speed, etc.) of components 10 in order to obtain an indication of the required power P.

Preferably, power threshold P₀ is equal to the rated value of engine power P_{E} that may be generated by internal combustion engine 2. Accordingly, when the required power P is lower than the rated engine power P_{E}, electric machine 3 is set to the first mode and internal combustion engine 2 alone is adapted to supply components 10 with all the required power P. When the required power P is greater than the rated engine power P_{E}, electric machine 3 is set to the second mode, both internal combustion engine 2 and electric machine 3 are adapted to supply components 10 with the required power P, and electric energy storage means 4 may be adapted to supply electric implements 20 with electric energy. In particular, in this condition the sum of engine power P_{E} and the motor power P_{M} is greater than or equal to the required power P.

In particular, the combination of electric machine 3 and electric energy storage means 4 is equivalent to a flywheel that is adapted to supplement the engine 2 when engine power P_{E} is less than required power P, and to store energy for later use when engine power P_{E} is greater than required power P. In other words, electric machine 3 working as a motor receives electric power from electric energy storage means 4 and is adapted to boost drive train 50 and the components thereof, when the required power P is greater than engine power P_{E} and electric machine 3 working as a generator is adapted to store energy into electric energy storage means 4 and/or to supply power to electric implements 20, when the required power P is lower than engine power P_{E}.

Alternatively, power threshold P₀ may be different than the rated value of engine power P_{E}. In particular, power threshold P₀ may be lower than the rated value of engine power P_{E}. More in particular, power threshold P₀ may be calculated as a percentage of the rated value of engine power P_{E}.

Furthermore, when electric machine 3 is in the second mode, the combination of internal combustion engine 2 and electric machine 3 working as a motor is equivalent to an internal combustion engine having a rated value of engine power P_{E}. greater than the rated value of engine power P_{E}.

As illustrated in figure 1, internal combustion engine 2 and electric machine 3 are connected to each other in a permanent manner. In detail, internal combustion engine 2 and electric machine 3 are connected through drive shaft 2a. More in detail, electric machine 3 is mounted to drive shaft 2a in such a way that:
- when electric machine 3 is set to the first mode, internal combustion engine 2 drives part of electric machine 3 in rotation through drive shaft 2a;
- when electric machine 3 is set to the second mode, both internal combustion engine 2 and electric machine 3 contribute to the rotation of drive shaft 2a.

More in detail, clutch 5 is adapted to selectively mechanically connect both internal combustion engine 2 and electric machine 3 to components 10. In addition, no clutch is mounted between internal combustion engine 2 and electric machine 3.

The electrical connection between electric machine 3, electric storage means 4 and electric implements 20 is best illustrated in figure 2.

In detail, work vehicle 1 comprises a power distribution unit 7, which is electrically connected to both electric machine 3 and electric energy storage means 4.

Work vehicle 1 further comprises one or more implement connectors 6, which allow the electric connection of electric implements 20 to work vehicle 1. For this purpose, implement connectors 6 are electrically connected to power distribution unit 7.

In further detail, power distribution unit 7 is adapted distribute electric energy between electric machine 3, electric energy storage means 4 and the electric implement(s) 20 through the implement connector(s) 6.

When electric machine 3 is in the first mode, power distributor 7 is adapted to receive the electric energy generated by electric machine 3 working as a generator and to store such electric energy in electric energy storage means 4 and/or to distribute it at least in part to the electric implement(s) 20.

When electric machine 3 is in the second mode, power distributor 7 is adapted to receive the electric energy stored in electric energy storage means 4 and to power electric machine 3 working as a motor and/or electric implement(s) 20.

Power distribution unit 7 comprises, in turn:
- one or more relays, which are adapted to control the electric connection between power distribution unit 7 and electric implements 20;
- pre-charge circuits; and
- at least one fuse, which is adapted to provide overcurrent protection of power distribution unit 7.

In particular, the relays are adapted to interrupt the electric connection between power distribution unit 7 and electric implements 20, in case of fault detection.

Furthermore, electric energy storage means 4 comprise a battery 8.

As shown in figure 2, work vehicle 1 further comprises an inverter 9, which is electrically connected to electric machine 3 and power distribution unit 7. In addition, work vehicle 1 comprises a battery 15, which is adapted to power inverter 9. More in detail, power distribution unit 7 is adapted to receive the electric energy generated by electric machine 3 through inverter 9.

Furthermore, work vehicle 1 comprises an electronic control unit 60, which is electrically connected at least indirectly to electric machine 3 and sensor means 21 (figures 1 and 2). Control unit 60 is configured to receive a signal associated with the physical quantities detected by sensor means 21, to calculate or estimate the required power P on the basis of the detected physical quantities and to set electric machine 3 to the first or the second mode accordingly.

As schematically illustrated in figure 2, work vehicle 1 comprises a power switch 22, which is electrically connected to control unit 60 and is configured to command the activation and/or the deactivation of electric machine 3. Power switch 22 may comprise a button, which may be arranged in a cabin of work vehicle 1 in such a way as to be accessible and operable by the driver. Alternatively, power switch 22 may be integrated in a digital dashboard arranged in the cabin of work vehicle 1.

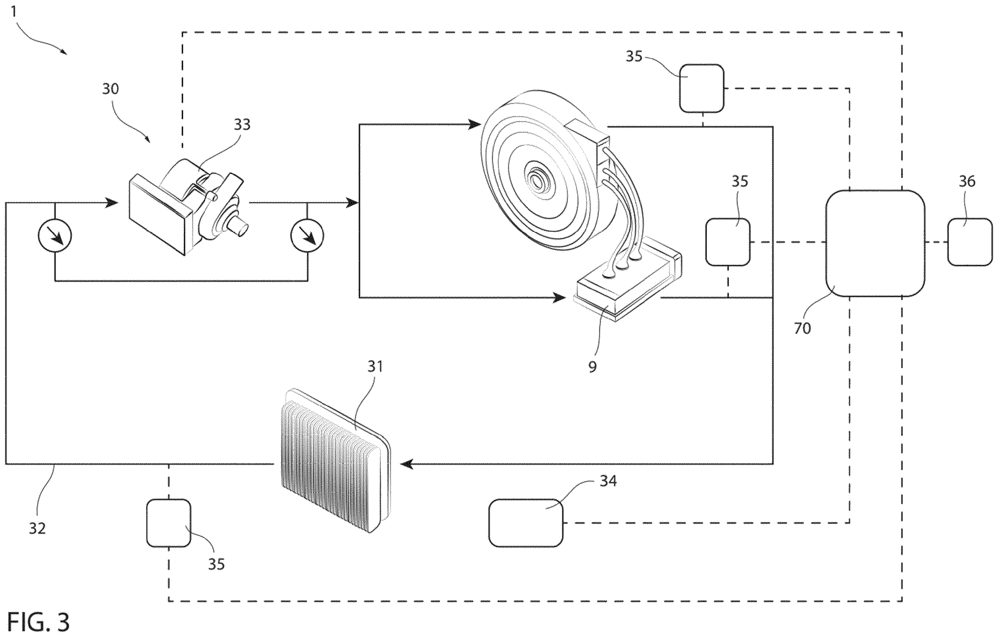

Work vehicle 1 further comprises a cooling system 30, which is adapted to cool down electric and/or electronic components of work vehicle 1. In particular, cooling system 30 is specifically adapted to cool down electric machine 3 and inverter 9 (figure 3).

Cooling system 30 comprises a heat exchanger 31, a pump 33 and a fluid circuit 32 - which is sketched with a continuous line in figure 3 and is adapted to fluidly connect heat exchanger 31 to pump 33. The fluid circuit 32 contains a cooling fluid, which is preferably a liquid, such as water or a mixture of water and corrosion inhibitors and/or antifreeze additives. In the embodiment shown, the cooling fluid is a mixture of water and glycol.

Pump 33 is adapted to circulate the cooling fluid within fluid circuit 32. Pump 33 may comprise a motor powered by battery 8 or battery 15, or may be powered by internal combustion engine 2 and/or electric machine **3.** In addition, the flow of the cooling fluid is directed from pump 33 towards heat exchanger 31.

Heat exchanger 31 comprises a radiator, which is adapted to cool down the cooling fluid as a result of thermal exchange with air. Heat exchanger 31, in turn, preferably comprises a fan 34, which is adapted to carry out a forced movement of air, thereby improving heat transfer. In particular, the fan 34 may comprise a motor powered by battery 8 or battery 15, or may be powered by internal combustion engine 2 and/or electric machine 3.

Fluid circuit 32 is adapted to pass through or in close proximity to the electric/electronic component(s) to cool down. In particular, the electric/electronic component is physically interposed between pump 33 and heat exchanger 31 along fluid circuit 32 according to the direction of the flow of the cooling fluid.

Cooling system 30 further comprises a plurality of thermal sensors 35, which are adapted to detect the temperature of the cooling fluid at respective different positions of fluid circuit 32 and a control unit 70, which is electrically connected to thermal sensors 35 and pump 33 and/or fan 34 (compare the dashed lines in figure 3). In detail, control unit 70 is configured to control pump 33 and/or fan 34 as a function of the temperature of the cooling fluid detected by thermal sensors 35.

Control unit 70 may be integrated in or in communication with control unit 60. In detail, control unit 70 and control unit 60 may be in communication through a CAN network.

Cooling system 30 may further comprise a plurality of pressure sensors 36, which are configured to detect the pressure of the cooling fluid within cooling system 30, in order to detect any possible failure of the cooling system, e.g. a leakage from a component of cooling system 30.

As schematically illustrated in figure 3, pressure sensors 36 are electrically connected to control unit 70. In detail, control unit 70 is configured to control pump 33 and/or fan 34 as a function of the pressure of the cooling fluid detected by pressure sensors 36.

The operation of the work vehicle 1 according to the present invention is described in the following starting from a condition in which electric machine 3 is deactivated. In this condition, mechanical power may be generated by means of internal combustion engine 2 only.

In use, electric machine 3 is activated by means of power switch 22. In particular, power switch 22 may be activated by the driver in the cabin.

Subsequently, control unit 60 receives the signal associated with the physical quantities detected by sensor means 21 and calculates the required power P on the basis of the detected physical quantities. Control unit 60 then controls electric machine 3 on the basis of the calculated required power P and/or the ECMS algorithm.

In particular, control unit 6 sets electric machine 3 to the first mode if required power P is lower than power threshold P₀.

When electric machine 3 is set to the first mode, internal combustion engine 2 drives electric machine 3 in rotation and electric machine 3 works as a generator. In detail, the electric energy generated by electric machine 3 working as a generator is stored by electric energy storage means 4 and/or used to power electric implements 20. In greater detail, power distributor 7 receives the electric energy generated by electric machine 3 working as a generator and stores such electric energy in electric energy storage means 4 and/or distributes it to the electric implement(s) 20 through implement connectors 6 (figure 2).

As long as electric machine 3 is set to the first mode, internal combustion engine 2 drives components 10. More specifically, internal combustion engine 2 operates wheels 11, power take off assembly 12, the hydraulic system and any mechanical implements 13 attached to work vehicle 1.

More specifically, control unit 60 allows electric machine 3 to work as a generator only after a plurality checks are carried out. By way of example, some or all of the following acts may be performed:
- a check of the voltage;
- a check of the relays of power distribution unit 7.

These checks are carried out in order to detect faults of various kinds, which may or may not be relevant to the safety of the vehicle. By way of example, these checks may reveal one or more of the following faults:
- a fault of the relays;
- a system over-temperature.

In particular, the checks might be carried out according to a finite-state logic.

Alternatively, if required power P is greater than power threshold P₀, control unit 6 sets electric machine 3 to the second mode. In particular, while electric machine 3 is set to the second mode, electric energy storage means 4 may be used to supply electric implements 20 with electric energy, depending on the specific capacity of electric energy storage means 4.

When electric machine 3 is set to the second mode, electric energy storage means 4 power electric machine 3, which works as a motor. In detail, electric machine 3 in the second mode generates a motor power P_{M} such that the sum of engine power P_{E} and the motor power P_{M} is greater than or equal to the required power P. In greater detail, power distributor 7 receives the electric energy stored in electric energy storage means 4 and powers electric machine 3 working as a motor and/or electric implement(s) 20 through implement connectors 6.

At the same time, thermal sensors 35 detect the temperature of the cooling fluid at respective different positions of fluid circuit 32 and control unit 70 controls pump 33 and/or fan 34 as a function of the detected temperatures.

In view of the foregoing, the advantages of work vehicle 1 according to the invention are apparent.

Since electric machine 3 can be set to the first or the second mode, the mechanical energy generated by internal combustion engine 2 can be supplemented with the mechanical energy generated by electric machine 3 when necessary. Therefore, the internal combustion engine 2 may be designed to produce a lower rated value of engine power P_{E} than internal combustion engines that are not supplemented by an electric machine.

In particular, an internal combustion engine producing a lower engine power is generally smaller in size and requires less space to fit on the vehicle than an internal combustion engine producing a higher engine power. Accordingly, at least some of the space that would be occupied by a larger engine can be used to install electric machine 3 on work vehicle 1. Therefore, work vehicle 1 can be equipped with both internal combustion engine 2 and electric machine 3 without requiring substantial variations of the main body and the overall layout of the vehicle. Moreover, the downsizing of the internal combustion engine has an impact on the after treatment system, which is generally simplified, i.e. it comprises less components, requires less maintenance and takes up less space. In this regard, it should be noted that the dimensions of the work vehicles particularly intended for vineyard or orchard applications are limited and cannot exceed certain values, in order to avoid the risk of the tractor no longer adapting to the distance between rows in the fields. In the light of this, the fact that work vehicle 1 has substantially the same overall volume of a work vehicle having an internal combustion engine having a rated power P_{E'} greater than the rated value of engine power P_{E} of internal combustion engine 2, but not comprising electric machine 3 is particularly advantageous.

In addition, since work vehicle 1 comprises both internal combustion engine 2 and electric machine 3, at least when electric machine 3 works as a motor, it is possible to take advantage of at least some of the benefits of electric traction without requiring the installation of dedicated infrastructure. In fact, electric energy storage means 4 are recharged when electric machine 3 works as a generator and it is not necessary to recharge electric energy storage means 4 with a dedicated charging station installed on the farm. Accordingly, it is possible to benefit from the partial electrification of agricultural vehicles in the short term.

In addition, since electric implements 20 may be electrically powered both when electric machine 3 is in the first and the second mode through connectors 6, work vehicle 1 may be coupled to mechanical implements 13 comprising electric implements 20. This is advantageous, because engine 2 is not used to directly generate energy intended to power electric implements 20 and this corresponds to a decrease in fuel consumption.

In other words, the claimed arrangement is a mild-hybrid architecture enabling powering of electric implements 20 through connectors 6.

Since work vehicle 1 comprises a cooling system 30, the temperature of electric machine 3 and/or inverter 9 may be advantageously controlled throughout the operation of work vehicle 1. Therefore, the risk of reaching temperatures that could affect the proper functioning of electrical equipment or damage is minimized.

In addition, since the claimed combination of electric machine 3 and electric energy storage means 4 has the same functionality of a flywheel, work vehicle 1 may not comprise a flywheel.

It is clear that modifications can be made to work vehicle 1 which do not extend beyond the scope of protection defined by the claims.

## Claims

1. Work vehicle (1) comprising:
- an internal combustion engine (2), which is adapted to generate mechanical energy to drive one or more components (10) of said work vehicle (1) and/or coupled to said work vehicle (1);
- an electric machine (3), which is operatively connected to said internal combustion engine (2); and
- electric energy storage means (4) electrically connected to said electric machine (3);
said work vehicle (1) comprising and/or being configured to be coupled to one or more electric implements (20) powered by electric energy;
said electric machine (3) being settable to:
- a first mode, in which said electric machine (3) is driven by said internal combustion engine (2) and works, in use, as a generator adapted to generate electric energy; said electric energy generated by said electric machine (3) being stored, in use, by said electric energy storage means (4) and/or being used to power said electric implements (20); or
- a second mode, in which said electric machine (3) is powered by said electric energy storage means (4) and works, in use, as a motor adapted to generate mechanical power to drive said one or more components (10); said electric energy storage means (4) being adapted to power, in use, said electric implements (20) with the electric energy stored therein;
wherein said electric machine (3) is set to said second mode when, in use, the mechanical power (P) required to drive said one or more components (10) is greater than a mechanical power threshold (P₀)
said work vehicle (1) **being characterized in that** said mechanical power threshold (P₀) is equal to a rated value of power (P_{E}) generable by said internal combustion engine (2).

2. Work vehicle according to claim 1, further comprising at least one implement connector (6), which is adapted to allow an electric connection of said one or more electric implements (20) to said work vehicle (1).

3. Work vehicle according to claims 1 or 2, wherein said electric machine (3) is set to said first or said second mode based on an ECMS algorithm.

4. Work vehicle according to any one of the foregoing claims, further comprising a clutch (5), which is adapted to selectively mechanically connect said internal combustion engine (2) and said electric machine (3) to said one or more components (10);
said internal combustion engine (2) and said electric machine (3) being permanently mechanically connected to each other.

5. Work vehicle according to any one of claims 2 to 4, further comprising a power distribution unit (7), which is electrically connected to said electric machine (3) and said electric energy storage means (4);
said power distribution unit (7) being adapted to receive, in use, the electric energy generated by said electric machine (3) and/or stored in said electric energy storage means (4) and to distribute said electric energy to said electric implements (20) through said implement connector (6).

6. Work vehicle according to claim 5, wherein said electric energy storage means (4) comprise a battery (8) and said work vehicle (1) further comprises an inverter (9), which is electrically connected to said electric machine (3) and said power distribution unit (7);
said power distribution unit (7) being adapted to receive, in use, the electric energy generated by said electric machine (3) through said inverter (9).

7. Work vehicle according to claims 5 or 6, wherein said power distribution unit (7) comprises, in turn:
- one or more relays, which are adapted to control the electric connection between said power distribution unit (7) and said electric implements (20);
- at least one pre-charge circuit; and
- at least one fuse, which is adapted to provide overcurrent protection of said power distribution unit (7).

8. Work vehicle according to any one of the foregoing claims, further comprising a cooling system (30) of said electric machine (3); said cooling system (30) comprising:
- a heat exchanger (31);
- a pump (33); and
- a fluid circuit (32), which fluidly connects said heat exchanger (31) to said pump (33);said fluid circuit (32) containing a cooling fluid;
said pump (33) being adapted to circulate said cooling fluid within said fluid circuit (32).

9. Work vehicle according to claim 8, wherein said cooling system (30) further comprises:
- a plurality of thermal sensors (35), which are adapted to detect the temperature of the cooling fluid at respective different positions of said fluid circuit (32); and
- an electronic control unit (70), which is electrically connected to said thermal sensors (35), said pump (33) and said heat exchanger (31);
said electronic control unit (70) being configured to control, in use, said pump (33) and/or said heat exchanger (31) as a function of the temperature of the cooling fluid detected, in use, by said thermal sensors (35).

10. Work vehicle according to claim 9, wherein said cooling system (30) further comprises a plurality of pressure sensors (36), which are adapted to detect the pressure of the cooling fluid within said cooling system (30);
said control unit (70) being further configured to control, in use, said pump (33) and/or said heat exchanger (31) as a function of the pressure of the cooling fluid detected, in use, by said pressure sensors (35).

11. Work vehicle according to any one of claims 3 to 10, wherein said work vehicle (1) further comprises:
- a plurality of sensor means (21), which are configured to detect one or more physical quantities of said components (10); and
- a further electronic control unit (60), which is electrically connected at least indirectly to said electric machine (3) and said sensor means (21);
said further control unit (60) being configured, in use, to receive a signal associated with the physical quantities detected by said sensor means (21), to calculate or estimate said mechanical power (P) required to drive said one or more components (10) on the basis of the detected physical quantities and to set said electric machine (3) to the first or the second mode accordingly.

## Patentansprüche

1. Arbeitsfahrzeug (1) mit:
- einem Verbrennungsmotor (2), der dazu eingerichtet ist, mechanische Energie zum Antreiben von einer oder mehreren Komponenten (10) des Arbeitsfahrzeugs (1), und/oder die mit dem Arbeitsfahrzeug (1) gekoppelt sind, zu erzeugen;
- einer elektrischen Maschine (3), die wirkend mit dem Verbrennungsmotor (2) verbunden ist; und
- elektrischen Energiespeichermitteln (4), die elektrisch mit der elektrischen Maschine (3) verbunden sind;
wobei das Arbeitsfahrzeug (1) aufweist und/oder dazu eingerichtet ist, mit einem oder mehreren elektrischen Arbeitsgeräten (20), die mittels elektrischer Energie betrieben werden, gekoppelt zu sein;
wobei die elektrische Maschine (3) in folgende Zustände einstellbar ist:
- einen ersten Modus, in dem die elektrische Maschine (3) von dem Verbrennungsmotor (2) angetrieben wird und in Gebrauch als Generator arbeitet, der dazu eingerichtet ist, elektrische Energie zu erzeugen, wobei die von der elektrischen Maschine (3) erzeugte elektrische Energie in Gebrauch von den elektrischen Energiespeichermitteln (4) gespeichert wird und/oder dazu verwendet wird, die elektrischen Arbeitsgeräte (20) anzutreiben; oder
- einen zweiten Modus, in dem die elektrische Maschine (3) von den elektrischen Energiespeichermitteln (4) angetrieben wird und in Gebrauch als Motor arbeitet, der dazu eingerichtet ist, eine mechanische Leistung zum Antreiben von der einen oder den mehreren Komponenten (10) zu erzeugen; wobei die elektrischen Energiespeichermittel (4) dazu eingerichtet sind, in Gebrauch die elektrischen Arbeitsgeräte (20) mit der darin gespeicherten elektrischen Energie anzutreiben;
wobei die elektrische Maschine (3) in den zweiten Modus versetzt wird, wenn in Gebrauch die mechanische Leistung (P), die zum Antreiben der einen oder den mehreren Komponenten (10) erforderlich ist, größer als ein mechanischer Leistungsgrenzwert (P₀) ist;
wobei das Arbeitsfahrzeug (1) **dadurch gekennzeichnet ist, dass** der mechanische Leistungsgrenzwert (P₀) gleich einem Nennwert an Leistung (P_{E}) ist, der von dem Verbrennungsmotor (2) erzeugbar ist.

2. Arbeitsfahrzeug nach Anspruch 1, das des Weiteren zumindest ein Arbeitsgerätanschlussteil (6) aufweist, das dazu eingerichtet ist, eine elektrische Verbindung von dem einen oder den mehreren elektrischen Arbeitsgeräten (20) mit dem Arbeitsfahrzeug (1) zu ermöglichen.

3. Arbeitsfahrzeug nach Anspruch 1 oder 2, wobei die elektrische Maschine (3) basierend auf einem ECMS-Algorithmus in den ersten oder den zweiten Modus versetzt wird.

4. Arbeitsfahrzeug nach einem der vorhergehenden Ansprüche, das des Weiteren eine Kupplung (5) aufweist, die dazu eingerichtet ist, selektiv mechanisch den Verbrennungsmotor (2) und die elektrische Maschine (3) mit der einen oder den mehreren Komponenten (10) zu verbinden;
wobei der Verbrennungsmotor (2) und die elektrische Maschine (3) permanent mechanisch miteinander verbunden sind.

5. Arbeitsfahrzeug nach einem der Ansprüche 2 bis 4, das des Weiteren eine Leistungsverteilungseinheit (7) aufweist, die elektrisch mit der elektrischen Maschine (3) und den elektrischen Energiespeichermitteln (4) verbunden ist;
wobei die Leistungsverteilungseinheit (7) dazu eingerichtet ist, in Gebrauch die elektrische Energie, die von der elektrischen Maschine (3) erzeugt wurde und/oder die in den elektrischen Energiespeichermitteln (4) gespeichert wurde, aufzunehmen und die elektrische Energie durch das Arbeitsgerätanschlussteil (6) an die elektrischen Arbeitsgeräte (20) zu verteilen.

6. Arbeitsfahrzeug nach Anspruch 5, wobei die elektrischen Energiespeichermittel (4) eine Batterie (8) aufweisen und wobei das Arbeitsfahrzeug (1) des Weiteren einen Inverter (9) aufweist, der elektrisch mit der elektrischen Maschine (3) und der Leistungsverteilungseinheit (7) verbunden ist;
wobei die Leistungsverteilungseinheit (7) dazu eingerichtet ist, in Gebrauch die von der elektrischen Maschine (3) erzeugte elektrische Energie mittels des Inverters (9) aufzunehmen.

7. Arbeitsfahrzeug nach Anspruch 5 oder 6, wobei die Leistungsverteilungseinheit (7) wiederum aufweist:
- ein oder mehrere Relais, die dazu eingerichtet sind, die elektrische Verbindung zwischen der Leistungsverteilungseinheit (7) und den elektrischen Arbeitsgeräten (20) zu steuern;
- zumindest eine Vorladeschaltung; und
- zumindest eine Sicherung, die dazu eingerichtet ist, einen Überlastschutz für die Leistungsverteilungseinheit (7) bereitzustellen.

8. Arbeitsfahrzeug nach einem der vorhergehenden Ansprüche, das des Weiteren ein Kühlsystem (30) für die elektrische Maschine (3) aufweist; wobei das Kühlsystem (30) aufweist:
- einen Wärmetauscher (31);
- eine Pumpe (33); und
- einen Flüssigkeitskreislauf (32), der den Wärmetauscher (31) fluidmäßig mit der Pumpe (33) verbindet, wobei der Flüssigkeitskreislauf (32) eine Kühlflüssigkeit beinhaltet;
wobei die Pumpe (33) dazu eingerichtet ist, die Kühlflüssigkeit innerhalb des Flüssigkeitskreislaufs (32) zu zirkulieren.

9. Arbeitsfahrzeug nach Anspruch 8, wobei das Kühlsystem (30) des Weiteren aufweist:
- eine Mehrzahl von thermischen Sensoren (35), die dazu eingerichtet sind, die Temperatur der Kühlflüssigkeit jeweils an unterschiedlichen Positionen des Flüssigkeitskreislaufs (32) zu erfassen; und
- eine elektrische Steuereinheit (70), die elektrisch mit den thermischen Sensoren (35), der Pumpe (33) und dem Wärmetauscher (31) verbunden ist;
wobei die elektrische Steuereinheit (70) dazu eingerichtet ist, in Gebrauch die Pumpe (33) und/oder den Wärmetauscher (31) in Abhängigkeit von der Temperatur der Kühlflüssigkeit, die in Gebrauch von den thermischen Sensoren (35) erfasst wurde, zu steuern.

10. Arbeitsfahrzeug nach Anspruch 9, wobei das Kühlsystem (30) des Weiteren eine Mehrzahl von Drucksensoren (36) aufweist, die dazu eingerichtet sind, den Druck der Kühlflüssigkeit innerhalb des Kühlsystems (30) zu erfassen;
wobei die Steuereinheit (70) des Weiteren dazu eingerichtet ist, in Gebrauch die Pumpe (33) und/oder den Wärmetauscher (31) in Abhängigkeit von dem Druck der Kühlflüssigkeit, der in Gebrauch von den Drucksensoren (35) erfasst wurde, zu steuern.

11. Arbeitsfahrzeug nach einem der Ansprüche 3 bis 10, wobei das Arbeitsfahrzeug (1) des Weiteren aufweist:
- eine Mehrzahl von Sensormitteln (21), die dazu eingerichtet sind, eine oder mehrere physikalische Größen der Komponenten (10) zu erfassen; und
- eine weitere elektrische Steuereinheit (60), die elektrisch zumindest indirekt mit der elektrischen Maschine (3) und den Sensormitteln (21) verbunden ist;
wobei die weitere Steuereinheit (60) dazu eingerichtet ist, in Gebrauch ein Signal zu empfangen, das zu den physikalischen Größen gehört, die von den Sensormitteln (21) erfasst wurden, um die mechanische Leistung (P), die zum Antreiben der einen oder der mehreren Komponenten (10) benötigt wird, basierend auf den erfassten physikalischen Größen zu berechnen oder zu bestimmen und um die elektrische Maschine (3) entsprechend in den ersten oder den zweiten Modus zu versetzen.

## Revendications

1. Véhicule de travail (1) comprenant :
- un moteur à combustion interne (2), qui est adapté pour générer de l'énergie mécanique afin d'entraîner un ou plusieurs composants (10) dudit véhicule de travail (1) et/ou couplé audit véhicule de travail (1) ;
- une machine électrique (3), qui est connectée de manière opérationnelle audit moteur à combustion interne (2) ; et
- des moyens de stockage de l'énergie électrique (4) raccordés électriquement à ladite machine électrique (3) ;
ledit véhicule de travail (1) comprenant et/ou étant configuré pour être couplé à un ou plusieurs outils électriques (20) alimentés par l'énergie électrique ;
ladite machine électrique (3) pouvant être réglée sur :
- un premier mode, dans lequel ladite machine électrique (3) est entraînée par ledit moteur à combustion interne (2) et fonctionne, en utilisation, comme un générateur adapté pour générer de l'énergie électrique ; ladite énergie électrique générée par ladite machine électrique (3) étant stockée, en utilisation, par lesdits moyens de stockage d'énergie électrique (4) et/ou étant utilisée pour alimenter lesdits outils électriques (20) ; ou
- un second mode, dans lequel ladite machine électrique (3) est alimentée par lesdits moyens de stockage d'énergie électrique (4) et fonctionne, en utilisation, comme un moteur adapté pour générer de l'énergie mécanique afin d'entraîner ledit ou plusieurs composants (10) ; lesdits moyens de stockage d'énergie électrique (4) étant adaptés pour alimenter, en utilisation, lesdits outils électriques (20) grâce à l'énergie électrique qui y est stockée ;
dans lequel ladite machine électrique (3) est réglée sur ledit second mode lorsque, en utilisation, la puissance mécanique (P) requise pour entraîner ledit ou lesdits composants (10) est supérieure à un seuil de puissance mécanique (P₀)
ledit véhicule de travail (1) **étant caractérisé en ce que** ledit seuil de puissance mécanique (P₀) est égal à une valeur nominale de puissance (P_{E}) pouvant être générée par ledit moteur à combustion interne (2).

2. Véhicule de travail selon la revendication 1, comprenant en outre au moins un connecteur d'outil (6), qui est adapté pour permettre une connexion électrique dudit ou desdits outils électriques (20) audit véhicule de travail (1).

3. Véhicule de travail selon la revendication 1 ou la revendication 2, dans lequel ladite machine électrique (3) est réglée sur ledit premier ou ledit second mode en fonction d'un algorithme ECMS.

4. Véhicule de travail selon l'une quelconque des revendications précédentes, comprenant en outre un embrayage (5), qui est adapté pour raccorder mécaniquement de manière sélective ledit moteur à combustion interne (2) et ladite machine électrique (3) audit ou auxdits composants (10) ;
ledit moteur à combustion interne (2) et ladite machine électrique (3) étant raccordés mécaniquement l'un à l'autre de manière permanente.

5. Véhicule de travail selon l'une quelconque des revendications 2 à 4, comprenant en outre une unité de distribution de puissance (7), qui est raccordée électriquement à ladite machine électrique (3) et auxdits moyens de stockage d'énergie électrique (4) ;
ladite unité de distribution de puissance (7) étant adaptée pour recevoir, en utilisation, l'énergie électrique générée par ladite machine électrique (3) et/ou stockée dans lesdits moyens de stockage d'énergie électrique (4) et pour distribuer ladite énergie électrique auxdits outils électriques (20) par l'intermédiaire dudit connecteur d'outils (6).

6. Véhicule de travail selon la revendication 5, dans lequel lesdits moyens de stockage de l'énergie électrique (4) comprennent une batterie (8) et ledit véhicule de travail (1) comprend en outre un onduleur (9), qui est raccordé électriquement à ladite machine électrique (3) et à ladite unité de distribution de puissance (7) ;
ladite unité de distribution de puissance (7) étant adaptée pour recevoir, en utilisation, l'énergie électrique générée par ladite machine électrique (3) par l'intermédiaire dudit onduleur (9).

7. Véhicule de travail selon la revendication 5 ou la revendication 6, dans lequel ladite unité de distribution de puissance (7) comprend, à son tour :
- un ou plusieurs relais, qui sont adaptés pour contrôler le raccordement électrique entre ladite unité de distribution de puissance (7) et lesdits outils électriques (20) ;
- au moins un circuit de précharge ; et
- au moins un fusible, qui est adapté pour fournir une protection contre les surintensités de ladite unité de distribution de puissance (7).

8. Véhicule de travail selon l'une quelconque des revendications précédentes, comprenant en outre un système de refroidissement (30) de ladite machine électrique (3) ; ledit système de refroidissement (30) comprenant :
- un échangeur de chaleur (31) ;
- une pompe (33) ; et
- un circuit fluide (32), qui raccorde fluidiquement ledit échangeur de chaleur (31) à ladite pompe (33) ; ledit circuit fluide (32) contenant un liquide de refroidissement ;
ladite pompe (33) étant adaptée pour faire circuler ledit liquide de refroidissement dans ledit circuit fluide (32).

9. Véhicule de travail selon la revendication 8, dans lequel ledit système de refroidissement (30) comprend en outre :
- une pluralité de capteurs thermiques (35), qui sont adaptés pour détecter la température du liquide de refroidissement à différentes positions respectives dudit circuit fluide (32) ; et
- une unité de commande électronique (70), qui est raccordée électriquement auxdits capteurs thermiques (35), à ladite pompe (33) et audit échangeur de chaleur (31) ;
ladite unité de commande électronique (70) étant configurée pour commander, en utilisation, ladite pompe (33) et/ou ledit échangeur de chaleur (31) en fonction de la température du liquide de refroidissement détectée, en utilisation, par lesdits capteurs thermiques (35).

10. Véhicule de travail selon la revendication 9, dans lequel ledit système de refroidissement (30) comprend en outre une pluralité de capteurs de pression (36), qui sont adaptés pour détecter la pression du liquide de refroidissement à l'intérieur dudit système de refroidissement (30) ;
ladite unité de commande (70) étant en outre configurée pour commander, en utilisation, ladite pompe (33) et/ou ledit échangeur de chaleur (31) en fonction de la pression du liquide de refroidissement détectée, en utilisation, par lesdits capteurs de pression (35).

11. Véhicule de travail selon l'une quelconque des revendications 3 à 10, dans lequel ledit véhicule de travail (1) comprend en outre :
- une pluralité de moyens de détection (21), qui sont configurés pour détecter une ou plusieurs grandeurs physiques desdits composants (10) ; et
- une autre unité de commande électronique (60), qui est raccordée électriquement au moins indirectement à ladite machine électrique (3) et auxdits moyens de détection (21) ;
ladite autre unité de commande (60) est configurée, en utilisation, pour recevoir un signal associé aux grandeurs physiques détectées par lesdits moyens de détection (21), pour calculer ou estimer ladite puissance mécanique (P) requise pour entraîner ledit ou lesdits composants (10) en fonction des grandeurs physiques détectées et pour régler ladite machine électrique (3) sur le premier ou le second mode en conséquence.
